# EUROPÄISCHE PATENTSCHRIFT

(11) **EP 0 864 535 B1**
(45) Veröffentlichungstag und Bekanntmachung des Hinweises auf die Patenterteilung: **23.01.2002**
(21) Anmeldenummer: 98104350.8
(22) Anmeldetag: 11.03.1998
(51) Int. Cl.: C01D 5/00, B01D 1/00

(54) **Verfahren und Vorrichtung zum Eindampfen salzhaltiger Lösungen**
Process and apparatus for evaporation of saline solutions
Méthode et dispositif d'évaporation d'une solution saline

(30) Priorität: 12.03.1997 DE 19710157; 12.03.1997 DE 19710151
(43) Veröffentlichungstag der Anmeldung: 16.09.1998
(73) Patentinhaber: RWE NUKEM GmbH, 63755 Alzenau (DE); LINN HIGH THERM GMBH, D-8459 Hirschbach 1 (DE)
(72) Erfinder: Wetteborn, Klaus, Dr. Dipl.-Ing., 53844 Troisdorf (DE); Gutmann, Arnd, Dipl.-Ing., 56564 Neuwied (DE); Linn, Horst, Dipl.-Ing., 92275 Eschenfelden (DE); Brandau, Egbert, Dipl.-Chem., 63755 Alzenau (DE); Wörner, Jörg, Dr. Dipl.-Chem., 63538 Grosskrotzenburg (DE); Theisen, Wolfgang, Dipl.-Ing., 63517 Rodenbach (DE); Chrubasik, Alfred, Dipl.-Ing., 63450 Hanau (DE)
(74) Vertreter: Stoffregen, Hans-Herbert, Dr. Dipl.-Phys.

(56) Entgegenhaltungen:
- EP-A- 0 343 673
- WO-A-87/05991
- DE-A- 2 822 370
- DE-A- 3 544 270
- DE-A- 3 637 189
- DE-A- 3 820 092
- US-A- 4 710 266

## Beschreibung

Die Erfindung bezieht sich auf ein Verfahren zum Eindampfen und Verfestigen salzhaltiger Lösungen, insbesondere borat- oder sulfathaltiger Lösungen in einem geschlossenen Behälter unter Einwirkung von Wärme mittels Mikrowellen, wobei die zu verdampfende Salzlösung kontinuierlich oder batchweise dem Behälter zugeführt, Flüssigkeit verdampft und sodann vorzugsweise einem Kondensatbehälter zugeführt wird. Ferner bezieht sich die Erfindung auf eine Vorrichtung zum Eindampfen und Verfestigen von salzhaltigen wie borathaltigen oder sulfathaltigen Lösungen umfassend eine Heizquelle, einen über eine Abdeckung verschließbaren Behälter mit zumindest einer Zuleitung für die einzudampfende und zu verfestigende Salzlösung und eine Abführleitung.

Aus der DE 35 44 270 A1 sind ein Verfahren und eine Einrichtung zur Trocknung kontaminierter Flüssigkeiten und Lösungen bekannt. Dabei wird die Flüssigkeit mittels Mikrowellen getrocknet. Um einen hohen Wirkungsgrad zu erzielen, wird vorgeschlagen, dass die Mikrowellenenergie während des Trocknungsvorgangs unter Phasenverschiebung der Mikrowellen in Anpassung an den jeweiligen Füllstand innerhalb des Behälters und das sich ändernde Absorptionsvermögen des Inhalts zugeführt wird.

Mit den bekannten Maßnahmen ergibt sich der Vorteil, dass die Wärmebehandlung einerseits und die hierfür erforderliche Handhabung andererseits voneinander räumlich getrennt werden können, wodurch radioaktive Belastung für das Bedienungspersonal ausgeschlossen bzw. weitestgehend vermindert werden kann.

Auch ist es bekannt, eine ein Fass umgebende elektrische Heizung zur Infasstrocknung von flüssigen radioaktien Abfällen zu verwenden (DE 40 53 162 A1, DE 32 00 331 C2). Um die Effizienz des Eintrocknens von Flüssigkeit mittels Mikrowellenenergie zu verbessern, sind nach der DE 31 09 513 C2 Mikrowellenenergie absorbierende Füllkörper vorgesehen, die in einem Turmreaktor eingebracht werden, der von zu trocknender Flüssigkeit durchströmt wird.

Wenn man mit den bekannten Verfahren sulfathaltige Salzlösungen eindampfen und verfestigen will, kann man zum Beispiel in einem Rollreifenfass mit einem Fassungsvermögen von 200 Liter Trockensubstanz von 100 kg einbringen, wobei im Falle von Glaubersalz (Na₂SO₄ -10H₂O) 55 % Kristallwasser enthalten ist. Da zudem entsprechende Fässer häufig nur bis zur Hälfte oder zu drei Vierteln gefüllt werden können, ist der Anfall der tatsächlich zu entsorgenden Volumina groß bzw. deren Lagerung bedarf viel Platz.

Aus der EP 0 343 673 A1 ist ein Verfahren zur Herstellung von Natriumcarbonat zu entnehmen, wobei zur Reduzierung des Wassergehaltes eine Erwärmung in einem Temperaturbereich zwischen 32 und 35.3 °C erfolgt. Die Erwärmung kann mittels Mikrowellenenergie erfolgen.

Nach der US 4,179,493 werden Salzlösungen mittels direkter Strahlung in Form von Sonnenlicht eingedampft.

Aus der US 4,514,329 ist ein Verfahren zur Verfestigung von flüssigen radioaktiven Abfällen bekannt, die unter Zugabe einer Siliziumlösung in Gele umgewandelt werden. Radioaktive Abfallproduktlösungen werden nach der JP 58-115066 A unter Zugabe von Si- und B-Verbindungen zu synthetischen Mineralien mittels Mikrowellen getrocknet, geröstet und geschmolzen.

Borathaltige Lösungen mit pH-Werten > 5, meist im alkalischen Bereich, fallen bei einer Vielzahl chemischer Prozesse an. Beim Betrieb von Druckwasserkernreaktoren werden unterschiedliche Lösungen über einen konventionellen Verdampfer eingeengt. Es fallen Konzentrate an, die ca. 20 Gew.-% an Salzen hauptsächlich Borverbindungen enthalten.

Entsprechende Verdampferkonzentrate werden sodann einer Verfestigung unterzogen, d. h. in geeigneten Behältnissen mittels externen Heizmitteln in Form vorzugsweise von Mantelheizungen bis zum Auskristallisieren der kristallwasserhaltigen Salze verfestigt Dieses Verdampfen erfolgt in einem Endlagerbehältnis.

Die bekannten Verfahren, bei denen borathaltige Lösungen mit toxischen, organischen Bestandteilen wie Ölen, Tensiden und/oder radioaktiven Stoffen verfestigt werden sollen, führen zu Feststoffen in Form von Salzblöcken, in denen häufig das gesamte Kristallwasser enthalten ist. Dies bedeutet, dass zum Beispiel beim Borax (Na₂B₄O₄ · 10 H₂O) bis zu 47 Gew.-% Wasser im Endprodukt enthalten sind. Im Falle des Dihydrats des Dinatriumtetraborats (Na₂B₄O₇ · 2H₂O) bedeutet dies einen 15 Gew.-%igen Wasseranteil.

Aus der DE 38 20 092 A1 ist ein Verfahren zum Behandeln von flüssigem, radioaktivem Abfall bekannt. Hierzu wird die Flüssigkeit mit Mikrowellen beaufschlagt, die ihrerseits über eine Seitenwandung eines Behältnisses eingekoppelt werden. Das Verdampfen der Flüssigkeit erfolgt dabei u. a. durch Kontakt der Flüssigkeit mit der erwärmten Innenfläche des Behälters.

In der DE 36 37 189 A1 ist eine Mikrowellentrocknungsvorrichtung beschrieben, bei der einzudampfende Flüssigkeit in einem Glaskolben eingebracht wird, der fortwährend gedreht wird. Um die Flüssigkeit zu erwärmen, wird der Glaskolben in einem üblichen Mikrowellenherd positioniert.

Der vorliegenden Erfindung liegt das Problem zu Grunde, ein Verfahren und eine Vorrichtung der eingangs genannten Art so weiterzubilden, dass mit einem hohen Wirkungsgrad salzhaltige, insbesondere sulfat- oder borathaltige Lösungen eingedampft und verfestigt werden können, wobei eine optimale Ausnutzung des Behälters erfolgen soll, in dem die Salzlösung eingedampft und verfestigt wird. Ferner soll sichergestellt sein, dass die Trockensubstanz eine hohe Dichte aufweist und weitgehend lunkerfrei ist, wobei eine Bergbildung beim Eindampfen ausgeschlossen werden soll.

Verfahrensmäßig wird das Problem erfindungsgemäß im Wesentlichen dadurch gelöst, dass die salzhaltige Lösung in dem Behälter erwärmt wird, in dessen Abdeckung ein Mikrowellen-Hohlleiter mündet, der in ein Horn übergeht, dessen Querschnitt und/oder Abstand zur Flüssigkeitsoberfläche der Lösung derart veränderbar ist, dass die Mikrowellen im wesentlichen unmittelbar auf die salzhaltige Lösung abgestrahlt werden.

Insbesondere zeichnet sich die Erfindung durch ein Verfahren zum Eindampfen und Verfestigen von Natriumsulfat enthaltender Lösung aus mit den Verfahrensschritten
- kontinuierliches oder batchweises Zuführen der Salzlösung in den Behälter und
- Erwärmen der Salzlösung mittels Mikrowellen derart, dass sich vorhandenes Natriumsulfat in Thenardit umwandelt und als Bodenkörper von jeweils zugeführter Menge an Salzlösung abscheidet.

Dabei wird insbesondere die Salzlösung in dem Behälter bei einem Druck p mit p < 1000 mbar, insbesondere mit 900 mbar < p < 1000 mbar absolut eingedampft, wobei die Temperatur T insbesondere T ≥ 85 °C, insbesondere 85 °C < T < 120 °C beträgt.

Nach einer Weiterbildung kann die Temperatur, bei der die Flüssigkeit verdampft, dann erniedrigt werden, wenn die Salzlösung Natriumchlorid enthält oder Natriumchlorid zugegeben worden ist.

Als Weiterbildung der Erfindung wird vorgeschlagen, dass die Salzlösung derart erwärmt wird, dass Natriumsulfat bereichsweise in γ-Na₂SO₄ umgewandelt wird.

Erfindungsgemäß nutzt man die Eigenschaft des Natriumsulfats dahingehend, dass bei verschiedenen Temperaturen unterschiedliche Kristallwassergehalte vorliegen, wobei das Verdampfen und Verfestigen bei Temperaturen erfolgt, bei denen das einen hohen Kristallwassergehalt aufweisende Glaubersalz in Thenardit überführt wird, ohne dass wiederum solche Temperaturen benötigt werden, die einen hohen Energiebedarf erforderlich machen und das Risiko in sich bergen, dass ein ungleichmäßiger Thenardit-Schichtaufbau innerhalb des Behälters erfolgt, wodurch insbesondere Lunkereinschlüsse auftreten könnten. Hierdurch würde anderenfalls die Dichte der Trockensubstanz unerwünscht verringert werden.

Eine Entwässerung des Natriumsulfats wird zusätzlich dadurch verbessert, dass Natriumsulfatsalze bereichsweise auf Temperaturen von über 250 °C erhitzt werden, wodurch wasserfreies hexagonales γ-Na₂SO₄ entsteht, welches bei weiterer Abkühlung unter 240 °C in rhombisches β-Na₂SO₄ und unter 180 °C in monoklines α-Na₂SO₄ verwandelt wird, welches in wässriger Lösung instabil ist und in das rhombische Thenardit übergeht und als Bodenkörper in dem Behälter anfällt.

Sofern ein batchweises Füllen des Behälters erfolgt, ist vorgesehen, dass einzudampfende und zu verfestigende Mengen von Natriumsulfat enthaltende Lösung dann zugeführt werden, wenn der in dem Behälter vorhandene Druck in etwa dem in dem Kondensatbehälter entspricht. Diese Druckabstimmung zueinander ist ein Maß dafür, dass die Flüssigkeit der Lösung weitgehend verdampft ist.

Vorzugsweise wird zum Eindampfen und Verfestigen der sulfathaltigen Lösung ein 200 Liter Fass, insbesondere Rollreifenfass, sowie zur Erzeugung der Mikrowellen ein Magnetron mit einer Leistung von etwa 2 bis 20 kW benutzt. Dabei kann die Leistung auf die Füllstandshöhe in dem Fass und/oder die Beschaffenheit der im Fass befindlichen Medien variabel einstellbar sein.

Die Salzlösung selbst sollte dem Behälter bei einer Temperatur T_{R}, insbesondere Raumtemperatur bzw. bei hohen Salzgehalten zur Vermeidung eines Auskristallisierens bei einer Temperatur T_{R} in etwa 40 °C zugeführt werden. Die Salzlösung ist sodann derart in dem Behälter zu erwärmen, dass dessen den Behälter verlassender Dampf eine Temperatur von in etwa 70 bis 130 °C, insbesondere 80 bis 120 °C aufweist. Diese Temperatur ist mit einfachen Maßnahmen in der Dampfabführleitung zu bestimmen, so dass eine einfache Regelung der Mikrowellenleistung möglich ist. Die Temperatur wird am Anfang der Dampfabführleitung (Brüdenleitung), also unmittelbar am Behälter gemessen. Sofern eine batchweise Salzlösungszuführung erfolgt, steigt die Temperatur in der Brückenleitung in etwa kontinuierlich, jedoch nicht stetig an. Bei in etwa konstanter Temperatur kann neue Salzlösung zugeführt werden. Somit kann aufgrund der Messung des Temperaturverlaufs die Salzlösungszuführung gesteuert werden (Zuführung bei T in etwa const.).

Insbesondere kann eine borathaltige Lösung mittels Mikrowellen derart erwärmt werden, dass sich ein Temperaturgradient vom Inneren der Lösung nach außen hin ausbildet unter gleichzeitigem Verdampfen von Wasser sowie Kristallwasser und/oder bei einer Umwandlung von Ortho-, oder Metaborsäure in B₂O₃ freigewordendes Wasser von auskristallisierten Borverbindungen. Vorzugsweise werden zur Erhöhung der Absorption der Mikrowellenenergie der borathaltigen Lösung zwei- und/oder dreiwertige Eisenverbindungen beigegeben.

Um energetisch günstig die borathaltige Lösung einzudampfen und zu verfestigen, ist des Weiteren vorgesehen, dass die Salzlösung in dem Behälter bei einem Druck p mit p < 1000 mbar, insbesondere mit 900 mbar < p < 1000 mbar verdampft wird.

Besonders gute Ergebnisse zeigen sich dann, wenn die Erwärmung der Lösung mit Mikrowellen einer Frequenz von in etwa 2450 MHz bei einer Leistung von 2 bis 20 kW eines die Mikrowellen erzeugenden Generators erfolgt.

Alternativ besteht die Möglichkeit, dass die Erwärmung der Lösung mit Mikrowellen einer Frequenz von in etwa 915 MHz bei einer Leistung von 7 bis 75 kW eines die Mikrowellen erzeugenden Generators erfolgt.

Bei diesen Leistungen bzw. Frequenzen sollte in dem Behältnis, in dem die Lösungen verdampft werden, ein Druck herrschen, der vorzugsweise im Bereich zwischen 20 und 100 mbar unter Normaldruck liegt.

Der Lösung sollte des Weiteren in einem Umfang Mikrowellenenergie zugeführt werden, dass sich bei in dem Behälter vorhandenem Druck von in etwa 900 bis 1000 mbar absolut eine Verdampfungsrate von 4 bis 30 l/h, insbesondere 15 bis 25 l/h einstellt.

Insbesondere zeichnet sich das erfindungsgemäße Verfahren zum einen durch das Verfestigen von borathaltigen Lösungen mit toxischen, organischen Bestandteilen wie Ölen oder Tensiden und/oder radioaktiven Stoffen und zum anderen durch die folgenden Verfahrensschritte aus:
- Einfüllen der borathaltigen Lösung in einen Behälter,
- Aufbau eines Drucks in dem Behälter im Bereich zwischen 20 und 100 mbar unter Normaldruck,
- im Wesentlichen vollständiges Verdampfen von Wasser mittels Mikrowellen,
- zumindest teilweises Schmelzen auskristallisierten Salzes mittels Mikrowellen.

Erfindungsgemäß erfolgt ein Eindampfen von borathaltigen Lösungen durch Erwärmung mit Mikrowellen vorzugsweise einer Frequenz von 2450 MHz oder 915 MHz, wobei die Wärme direkt in die zu verdampfende Lösung eingebracht wird. Hierdurch entsteht ein Wärmestrom vom Inneren der Lösung nach außen, d. h., sowohl das zu verdampfende Wasser als auch das verdampfte Kristallwasser strömen in gleicher Richtung wie der Wärmestrom. Der Wärmestrom steht dem Verdampfungsstrom nicht entgegen.

Die Entwässerung der borathaltigen Lösung kann durch Mikrowellenenergie-Einbringung soweit getrieben werden, dass auch das Kristallwasser des Dinatriumtetraborats vollständig entfernt wird. Auch die Überführung der Orthoborsäure in Bortrioxid ist aufgrund der erfindungsgemäßen Lehre möglich.

Zwei- und/oder dreiwertige Eisenverbindungen verstärken das Einbringen der Mikrowellenenergie und bewirken dadurch, dass auch kleinste Restmengen an Wasser bzw. Kristallwasser noch verdampfen, ohne dass eine stark erhöhte Temperatur erforderlich ist.

Die Verdampfung des Wassers, d. h. sowohl das Wasser der wässrigen Lösung als auch das Kristallwasser sollte in einem Behälter erfolgen, in dem ein Druck von in etwa 900 bis 1000 mbar absolut herrscht. Die die Mikrowellen erzeugenden Generatoren sollten auf eine Leistung zwischen 2 und 20 kW bei einer Mikrowellenfrequenz von 2450 MHz bzw. auf eine Leistung zwischen 7 und 75 kW bei einer Frequenz von 915 MHz ausgelegt werden.

Die einzudampfende Lösung kann sowohl kontinuierlich als auch batchweise dem Behälter zugeführt werden. Dabei wird insbesondere die einzudampfende Menge an Salzlösung batchweise dann dem Behälter zugeführt, wenn der Druck in dem Behälter in etwa dem des Kondensatbehälters entspricht. Eine alternative Steuerung der batchweisen Zuführung der Salzlösung kann dadurch erfolgen, dass die Temperatur des aus dem Behälter verlassenden Dampfes (Brüde) gemessen wird. Bleibt die Temperatur nach vorherigem nichtlineraren Anstieg konstant oder in etwa konstant, so wird neue Lösung zugeführt, da die zuvor eingelassene Lösung eingedampt ist.

Nach einem weiteren hervorzuhebenden Vorschlag der Erfindung wird nach jedem Trocknungsvorgang die trockene Salzschicht mit einem wasserunlöslichen Material wie Gel abgedeckt, d. h. versiegelt, um die Salzlösung vor Eindringen von Wasser vor der Zuführung des nächsten Batches zu schützen.

Eine Vorrichtung insbesondere zur Durchführung des zuvor beschriebenen Verfahrens zum Eindampfen und Verfestigen von salzhaltigen wie sulfat- oder borathaltigen Lösungen umfasst ein Magnetron zur Erzeugung von Mikrowellen, einen diesem nachgeschalteten Mikrowellenhohlleiter, einen über eine haubenartige Abdeckung verschließbaren Behälter mit zumindest einer Zuleitung für die zu verdampfende und zu verfestigende Salzlösung und eine Abführleitung, wobei der Mikrowellenhohlleiter im Bereich der Abdeckung in ein Horn übergeht, dessen Querschnitt und/oder Abstand zur Flüssigkeitsoberfläche der Lösung derart veränderbar ist, dass die Mikrowellen im Wesentlichen ausschließlich unmittelbar auf die Salzlösung abstrahlbar sind.

Durch diese Maßnahmen wird im Mittelbereich des Fasses eine Bergbildung ausgeschlossen, wodurch anderenfalls die Homogenität der Trockensubstanz negativ beeinflusst werden würde.

Durch eine Absenkung und Drehung des Fasses während der Eindampfung wird die Verteilung der Mikrowellenenergie über den Fassquerschnitt ebenfalls sehr gleichmäßig eingestellt.

Der Hohlleiter selbst kann auch durch eine haubenartige Abdeckung des Behälters geführt werden, wobei die Abdeckung innenseitig eine Schutzschicht und/oder einen Spritzschutz aufweisen kann, so dass ein und dieselbe Abdeckung für verschiedene Fässer, in denen borhaltige Lösungen eingedampft und verflüssigt werden sollen, benutzt werden kann.

In Ausgestaltung ist vorgesehen, dass der Deckel wie Diffusor und der Behälter randseitig über eine flüssigkeitsgefüllte Labyrinthdichtung gas- und mikrowellendicht verschlossen sind. Dabei kann der Behälter auf einer höhenverstellbaren Anordnung wie Hubtisch drehbar angeordnet sein.

Nach einer Weiterbildung ist vorgesehen, dass in dem zu dem Diffusor führenden Hohlleiter ein durch Luft- oder Inertgasspülung geschütztes Mikrowellenfenster angeordnet ist.

Insbesondere ist die Temperatur innerhalb des Fasses sowie der Unterdruck in diesem beim Eindampfen und Verfestigen einer sulfathaltigen Lösung derart einzustellen, dass sich ein schichtweiser Aufbau von Thenardit, Glaubersalz und Wasser ergibt, wobei suksessiv das Wasser verdampft und Glaubersalz in Thenardit umgewandelt wird. Hierdurch wird eine Trockensubstanz in Form eines homogenen Salzblocks erzielt, dessen Volumen 90 bis 95 % des Fasses selbst einnehmen kann, wobei der Wassergehalt weniger als 0,5 % beträgt. Dabei ist darauf zu achten, dass die Schicht von Glaubersalz und Wasser kleiner als die maximale Eindringtiefe der Mikrowellen ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

### Beispiel 1

Eine wässrige Lösung mit 8,00 kg Na₂B₄O₇·10 H₂O, 6,30 kg H₃BO₃, 970 g FeSO₄·7 H₂O, 1,80 kg Na₃PO₄ · 12 H₂O, 5,50 kg Na₂SO₄, 1,50 kg Kieselgur aufgefüllt auf 100 l, die einen pH-Wert von 7 bis 7,5 aufwies, wurde in einem Rollreifenfass mit Mikrowellenenergie beaufschlagt. Die Frequenz betrug 2450 MHz. Der die Mikrowellen erzeugende Generator wurde auf eine Leistung von 12 kW eingestellt. Ferner wurde in dem die Lösung aufnehmenden Behälter ein Druck von in etwa 20 mbar unter Normaldruck aufgebaut. Bei diesen Parametern ergaben sich Wasserverdampfungsraten von 15,4 l/h. Als Ergebnis konnte ein fester, lunkerfreier Salzblock mit einer Dichte von 2,3 g/cm³ erzielt werden.

### Beispiel 2

Eine dem Beispiel 1 entsprechende Lösung wurde mit Mikrowellen gleicher Frequenz beaufschlagt, jedoch bei einer Leistungsstufe von 20 kW des Generators. Zu Beginn der Verdampfung ergaben sich Verdampfungsraten von 24,3 l/h. Nachdem die Verdampfung abgeschlossen, d. h. merkliche Verdampfungsraten bzw. eine Temperaturveränderung in einer von dem Behälter ausgehenden Brüdenleitung nicht mehr festgestellt werden konnten, wurde die Mikrowellenbeaufschlagung des auskristallisierten Feststoffes fortgeführt, und zwar über eine Zeitdauer von 16 Stunden. Als Ergebnis konnte ein glasartiges geschmolzenes Produkt festgestellt werden, dessen Dichte 2,4 g/cm³ betrug.

### Beispiel 3

Es wurde eine dem Beispiel 1 entsprechende Lösung mit Mikrowellen einer Frequenz von 915 MHz beaufschlagt, wobei der Generator auf eine Leistung von 35 kW eingestellt war. Der nach dem Verdampfen vorliegende feste Salzblock wies eine Dichte von 2,28 g/cm³ auf.

### Beispiel 4

Die nach Beispiel 3 eingedampfte Lösung, d. h. der Salzblock wurde weiterhin mit Mikrowellen beaufschlagt, und zwar insgesamt über einen Zeitraum von 12 Stunden nach Beendigung der Verdampfung. Als Ergebnis konnte ein glasartiges Endprodukt einer Dichte von 2,43 g/cm³ festgestellt werden.

### Beispiel 5

Der dem Beispiel 1 zu entnehmenden Lösung wurden 2 kg Fe₂(SO₄)₃ zugesetzt. Dann wurde die Lösung mit Mikrowellen einer Frequenz von 2450 MHz beaufschlagt, die durch einen Generator einer Leistung von 12 kW erzeugt wurde. In dem Behälter selbst wurde ein Druck von etwa 900 mbar erzeugt. Als Endprodukt konnte ein teilweise angeschmolzener Salzblock der Dichte 2,4 g/cm³ gewonnen werden.

### Beispiel 6

Eine wässrige Lösung mit 10 kg Na₂B₄O₇ · 10 H₂O, 6,30 kg H₃BO₃, 970 g FeSO₄ · 7 H₂O, 1,80 kg Na₃PO₄ · 12 H₂O, 1,50 kg Kieselgur und 2 kg K₂Cr₂O₇ aufgefüllt auf 100 l wurde in ein Rollreifenfass eingefüllt und mit Mikrowellen beaufschlagt. Die Frequenz betrug 2450 MHz, die Leistung des verwendeten Magnetrons 12 kW. Es ergab sich nach dem Verdampfen ein festes Salz einer Dichte von 2,6 g/cm³. Der Wassergehalt betrug 0,8 Gew.-%.

### Beispiel 7

Eine dem Beispiel 6 zu entnehmende Lösung versetzt mit 0,5 kg CsCl, jedoch ohne K₂Cr₂O₇ wurde unter den Versuchsbedingungen des Beispiels 1 verfestigt. Es ergab sich ein fester Salzblock mit einer Dichte von 2,5 g/cm³.

### Beispiel 8

0,8 kg SrSO₄ wurde einer Lösung der Zusammensetzung nach dem Beispiel 7 zugesetzt und sodann nach den Betriebsparametern des Beispiels 1 erwärmt. Der gewonnene Salzblock war nahezu wasserfrei (0,7 Gew.-%) und zeigte keine Lunker. Die Dichte konnte mit 2,38 g/cm³ bestimmt werden.

### Beispiel 9

Um festzustellen, inwieweit der Kristallwassergehalt in Abhängigkeit von der Leistung des Mikrowellen erzeugenden Magnetrons beeinflusst wurde, wurde eine dem Beispiel 5 zu entnehmende Lösung in einen Behälter eingefüllt, in dem sodann ein Druck von 250 mbar eingestellt wurde. Über einen Hohlleiter wurden Mikrowellen einer Frequenz von 2450 MHz eingekoppelt. Die Leistung des Magnetrons betrug jedoch nur 6 kW. Mit diesen Versuchsparametern ergab sich ein Salzblock mit einem Wassergehalt von 7 Gew.-%. Dies bedeutet, dass der Hauptbestandteil Na₂B₄O₇ noch rechnerisch nahezu 1 Kristallwasser enthält, d. h. von 10 Kristallwasser etwa 9 Kristallwasser entfernt werden konnten.

### Beispiel 10

Um festzustellen, inwieweit die Energieübertragung der Mikrowellen auf die Lösungen in Abhängigkeit von Zusätzen der Lösung beeinflussbar ist, wurde eine Lösung der Zusammensetzung nach Beispiel 9 mit 2 kg Fe₃O₄ versetzt und nach den Versuchsparametern des Beispiels 9 behandelt. Es ergab sich ein fester Salzblock mit einem Wassergehalt von 0,5 Gew.-%. Somit konnte aufgrund des Zusatzes der Eisenverbindung die Mikrowellenenergie besser absorbiert werden, so dass auch Restmengen an Wasser noch verdampften.

### Beispiel 11

Eine Lösung mit 14 kg H₃BO₃, 1 kg Na₂B₄O₇ · 10 H₂O, 2kg Na₂PO₄ ·12 H₂O, 0,7 kg SrSO₄, 0,5 kg CsCl, 2 kg Kieselgur und 0,5 kg nichtionische Tenside aufgefüllt auf 100 l mit Wasser wurde mit einer Mikrowellenenergie von 16 kW bei einem Druck von 900 mbar eingedampft. Es ergab sich eine Wasserverdampfungsrate von 19,8 l/h und ein fester, teilweise geschmolzener Block der Dichte 2,39 g/cm³.

### Beispiel 12

Eine wässrige Lösung mit 20 Gew.-% Na₂SO₄ wird kontinuierlich in ein 200 Liter Rollreifenfass gegeben und mit Mikrowellen beaufschlagt, die von einem Magnetron einer Leistung von 6 kW erzeugt werden. Das Rollreifenfass ist mit einem hauben-/ domartigen Deckel verschließbar, durch welchen die Salzlösung in das Fass eingeführt und das verdampfende Wasser abgeleitet wird. In dem Fass selbst wird ein Druck von -20 bis -100 mbar gegenüber Normaldruck eingestellt. Bei diesen Parametern konnten Wasserverdampfungsraten von 7 bis 8 l/h erzielt werden. Nach vollständigem Befüllen des Rollreifenfasses war dieses mit 450 kg Natriumsulfat gefüllt. Der Wassergehalt des Salzblockes war geringer als 0,5 Gew.-%. Die Dichte selbst betrug 2,35 g/cm³. Es konnte festgestellt werden, dass der Salzblock gleichmäßig und ohne Lunker ausgebildet war.

### Beispiel 13

Eine wässrige Lösung mit 15 Gew.-% Na₂SO₄ und 3 Gew.-% K₂Cr₂O₇ wurde entsprechend dem Beispiel 1 Mikrowellenergie ausgesetzt, wobei in dem Behälter ein Druck von 900 bis 1000 mbar absolut eingestellt wurde. Bei gleichen Wasserverdampfungsraten von 7 bis 8 l/h ergab sich ein verfestigter Salzblock mit einer Dichte von 2,48 g/cm³. Der Salzblock selbst war lunkerfrei.

### Beisniel 14

Nach den Verfahrensparametern des Beispiels 1 wurde eine wässrige Lösung mit 17 Gew.-% Na₂SO₄ und 0,5 Gew.-% Vanadium(IV)oxidchlorid eingedampft und verfestigt. Es ergab sich ein Salzblock mit einem Wassergehalt von 0,6 Gew.-% und einer Dichte von 2,38 g/cm³.

### Beispiel 15

Eine wässrige Lösung mit 4 Gew.-% NaCl, 5,8 Gew.-% Na₂SO₄ - 10H₂O, 3,7 Gew.-% Na₃PO₄ · 12H₂O, 6,4 Gew.-% FeSO₄ · 7H₂O, 0,3 Gew.-% CaSO₄ · 2 H₂O, 0,8 Gew.-% Kieselgur, 0,3 Gew.-% Al₂O₃, 3.2 Gew.-% KOH, 1,6 Gew.-% Oxalsäure, 1,6 Gew.-% Citronensäure wurde analog dem Beispiel 1 eingedampft. Es ergab sich ein fester Salzblock ohne Lunker und Risse mit einem Wassergehalt von 0,3 Gew.-%. Die organischen Bestandteile (Oxalsäure und Citronensäure) wurden zersetzt.

### Beispiel 16

Eine dem Beispiel 4 entsprechende Lösung gleicher Zusammensetzung sowie Zusätzen von 0,01 Gew.-% CsCl und 0,01 Gew.-% SrSO₄ wurde bei einer Mikrowellenleistung von 6 kW, bei einem Druck in dem Behältnis zwischen 900 und 1000 mbar absolut und bei Wasserverdampfungsraten von 7 bis 8 l/h verdampft und verfestigt. Es ergab sich ein gleichmäßiger, lunkerfreier, nahezu wasserfreier Salzblock.

### Beispiel 17

Eine wässrige Lösung mit 16 Gew.-% Na₂SO₄ und Anteilen von Tensiden (ca. 3 Gew.-%), Komplexbildnern wie EDTA, NTE (ca. 1 Gew.-%), Strontium-, Cobalt- und Caesiumsalzen (je ca. 1 Gew.-%) und 10 Gew.-% Eisen(III)chlorid wurden gemäß Beispiel 1 behandelt. Es ergab sich ebenfalls ein fester lunkerfreier Salzblock mit einem Wassergehalt < 1 Gew.-%.

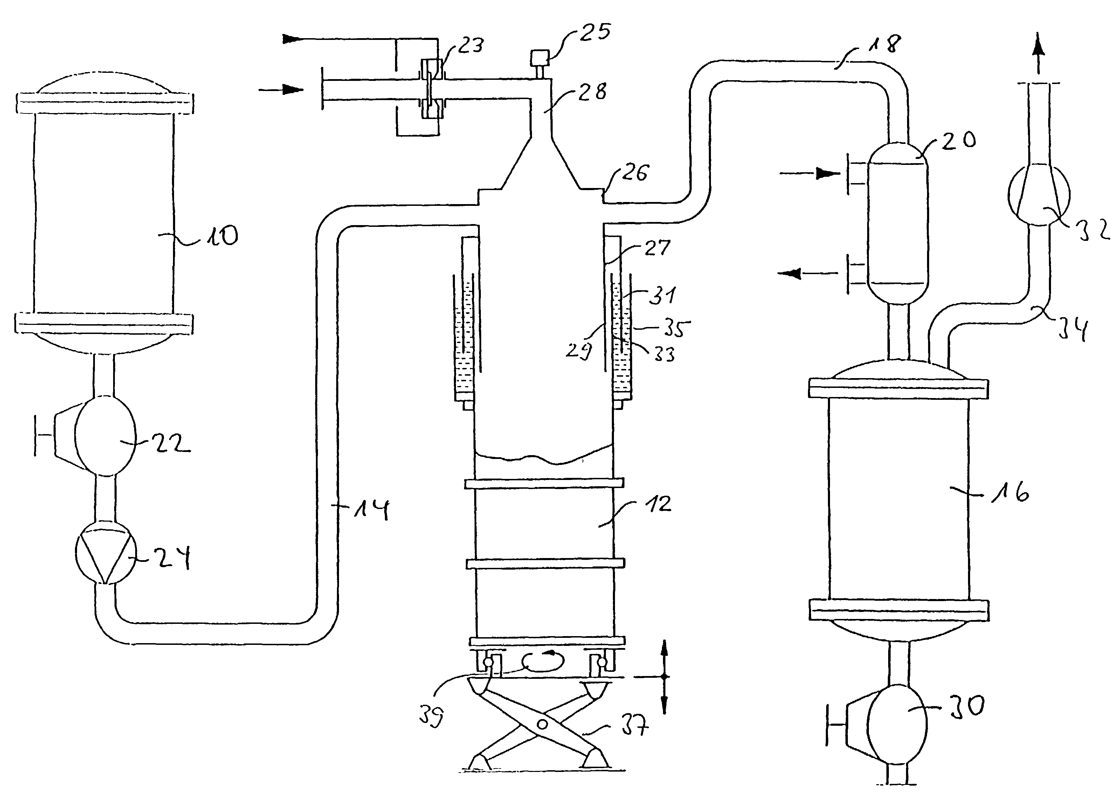

Eine Vorrichtung, mit der das erfindungsgemäße Verfahren zum Eindampfen und Verfestigen von salzhaltigen wie sulfat- oder borathaltigen Lösungen durchführbar ist, ist der einzigen Figur zu entnehmen. In dieser sind rein prinzipiell ein Vorlagebehälter 10, eine zu einem Behälter 12 führende Leitung 14 sowie ein Kondensatbehälter 16 dargestellt, der mit dem Behälter 12 über eine Leitung 18 verbunden ist, in der ihrerseits ein Kondensator 20 angeordnet ist. Der Vorlagebehälter 10 weist ein Absperrventil 22 und eine diesem nachgeschaltete Förderpumpe 24 auf, über die zu verdampfende und zu verfestigende Salzlösung aus dem Vorlagebehälter 10 über die Leitung 14 dem Behälter 12 vorzugsweise in Form eines Rollreifenfasses 12 eines Fassungsvermögens von 200 l zugeführt wird. Im Bereich eines grundsätzlich dom- oder haubenartig vorzugsweise in Form eines Diffusors 27 ausgebildeten Deckels 26 mündet ein Mikrowellenhohlleiter 28, über den von einem nicht dargestellten Magnetron Mikrowellen in den Behälter 12 eingekoppelt werden. Der Mikrowellenhohlleiter 28 geht in ein Horn 29 über, welches im Querschnitt bzw. im Abstand zur Flüssigkeitsoberfläche in dem Behälter 12 veränderbar ist. Die Veränderbarkeit wird bevorzugterweise durch eine Höhenverstellbarkeit des Behälters 12 erreicht.

Ferner ergibt sich aus der einzigen Fig., dass der Deckel 26 und das Horn 29 ineinander übergehen bzw. Deckel 26 und Horn 29 eine Einheit bilden.

Um die Mikrowellen im Wesentlichen auf die Flüssigkeitsoberfläche und nicht auf die Behälterwandungen abzustrahlen, ist vorgesehen, dass der Behälter 12 mit der zu verdampfenden Lösung höhenverstellbar und vorzugsweise drehbar ausgebildet ist. Hierzu ist der Behälter über eine mit Flüssigkeit gefüllte Labyrinthdichtung gegenüber dem den Behälter 12 kopfseitig verschließenden Diffusor 27 abgedichtet, der folglich die Funktion des Deckels 26 ausübt. Durch den Diffusor 27 erfolgt zusätzlich eine Vergleichmäßigung der Mikrowellenstrahlung auf die Oberfläche der Salzlösung.

Der Diffusor 27 als auch der Behälter 12 weisen endseitig konzentrisch zueinander verlaufende Wandungen 29, 31 bzw. 33, 35 auf, wobei die äußere Wandung 31 des Diffusors 27 zwischen den Wandungen 33, 35 des Behälters 12 verläuft. Umgekehrt erstreckt sich die innere Wandung 33 des Behälters 12 zwischen den Wandungen 29, 31 des Diffusors 27. Der zwischen den Wandungen 33, 35 verlaufende Raum ist mit einer Flüssigkeit gefüllt, so dass die erforderliche Abdichtung zwischen dem Behälter 12 und dem Diffusor 27 gewährleistet ist. Somit kann der Behälter 12 zu dem Diffusor 27 über vorzugsweise einen Scherentisch 37 höhenverstellt werden, wobei der Behälter 12 mittels eines nicht näher bezeichneten Antriebs um seine Längsachse drehbar ist (angedeutet durch Pfeil 39).

Hierdurch wird sichergestellt, dass die Mikrowellen unmittelbar auf die Flüssigkeitsoberfläche und nicht zuvor auf die Innenwandung des Behälters 12 gelangen. Dadurch, dass der Mikrowellenkegel die gesamte Oberfläche der Flüssigkeit gleichermaßen abdeckt, wird sichergestellt, dass im Mittelbereich eine Bergbildung ausgeschlossen ist.

Ferner befindet sich in dem Hohlleiter 28 ein Plasmadetektor 25, der dann, wenn Plasma sich in Richtung des Hohlleiters 28 ausbilden sollte, dass Magnetron abschaltet.

Des Weiteren befindet sich in dem Mikrowellenhohlleiter 28 vor dem Diffusor 27 ein Mikrowellenfenster 23, welches gegenüber dem Dampf durch eine Luft- oder Inertgasspülung geschützt ist, wobei die Spülung derart erfolgt, dass der Dampf nicht in den Bereich des Hohlleiters 28 gelangen kann, in dem sich das Mikrowellenfenster 23 befindet. Vielmehr wird aus dem Hohlleiter 28 das das Mikrowellenfenster schützende Gas wie Inertgas abgesaugt, ohne dass in den Abschnitt Dampf eindringen kann.

In dem Diffusor 27, der über die von den konzentrisch zueinander verlaufenden Wandabschnitten 29, 31, 33, 35 des Diffusors 28 bzw. des Behälters 12 gebildeten Labyrinthdichtung bzw. Tauchverschluss gas- und mikrowellendicht mit dem Behälter 12 verbunden ist, münden auch die Flüssigkeitszufuhrleitung 14 und die Dampfabführleitung 18. Somit kann ein und derselbe Diffusor 27 für verschiedene Behälter benutzt werden, ohne dass aufwendige Umrüstungen erforderlich sind. Der Kondensatbehälter 16 ist bodenseitig über ein Ventil 30 verschließbar, um in erforderlichem Umfang angesammeltes Kondensat ablaufen zu lassen.

Der erforderliche Unterdruck sowohl im Kondensatbehälter 16 als insbesondere auch in dem Behälter 12 wird mittels einer Pumpe 32 erzeugt, die in einer von dem Kondensatbehälter 16 ausgehenden Leitung 34 angeordnet ist.

Bei einem ein Fassungsvermögen von 200 Liter aufweisenden Fass 12 sollte die Mikrowellenleistung des Magnetrons mindestens 6 kW betragen, um bei einem Druck innerhalb des Behälters 12 von in etwa 800 bis 1000 mbar absolut eine Wasserverdampfungsrate von 7 bis 8 l/h zu erzielen, wobei die Dampftemperatur, die in der Leitung 18 gemessen wird, zwischen 80 und 120 °C betragen sollte. Höhere Verdampfungsraten sind mit Magnetrons zu erreichen, die bis zu 20 kW Leistung besitzen (z. B. 25 l/h bei 20 kW). Bei Einhaltung dieser Parameter wird eine zu verdampfende und zu verfestigende sulfathaltige Lösung auf eine Temperatur von in etwa 40 bis 60 °C erwärmt, wodurch sichergestellt wird, dass sich in dem Behälter 12 eine sich aufbauende Bodenschicht von Thenardit ausbildet. Oberhalb der Thenardit-Schicht befindet sich zunächst Glaubersalz sowie Wasser. Durch weiteres Verdampfen wird das Glaubersalz sodann in Thenardit umgewandelt und das frei gewordene Wasser verdampft.

## Patentansprüche

1. Verfahren zum Eindampfen und Verfestigen salzhaltiger Lösungen, insbesondere borat- oder sulfathaltiger Lösungen, in einem geschlossenen Behälter unter Einwirkung von Wärme mittels Mikrowellen, wobei die zu verdampfende Salzlösung kontinuierlich oder batchweise dem Behälter zugeführt, Flüssigkeit verdampft und sodann vorzugsweise einem Kondensatbehälter zugeführt wird,
**dadurch gekennzeichnet,**
**dass** die salzhaltige Lösung in dem Behälter mit einer Abdeckung erwärmt wird, in der ein Mikrowellen-Hohlleiter mündet, der in ein Horn übergeht oder ein solches aufweist, dessen Querschnitt und/oder Abstand zur Flüssigkeitsoberfläche der Lösung derart veränderbar ist, dass die Mikrowellen im Wesentlichen unmittelbar auf die salzhaltige Lösung abgestrahlt werden.

2. Verfahren nach Anspruch 1 zum Eindampfen und Verfestigen von borathaltigen Lösungen, insbesondere borathaltiger Lösung mit einem pH-Wert > 5, vorzugsweise einem pH-Wert ≥ 7,
**dadurch gekennzeichnet,**
**dass** zur Erhöhung von Mikrowellenenergie-Absorption der borathaltigen Lösung zwei- und/oder dreiwertige Eisenverbindungen beigegeben werden.

3. Verfahren nach Anspruch 1 zum Eindampfen und Verfestigen von Natriumsulfat enthaltender Lösung, insbesondere hochkonzentrierter sulfathaltiger Lösung, in einem geschlossenen Behälter mit den Verfahrensschritten
- kontinuierliches oder batchweises Zuführen der Salzlösung in den Behälter und
- Erwärmen der Salzlösung mittels Mikrowellen derart, dass sich vorhandenes Natriumsulfat in Thenardit umwandelt und als Bodenkörper von jeweils zugeführter Menge an Salzlösung abscheidet.

4. Verfahren nach Anspruch 1,
**dadurch gekennzeichnet,**
**dass** die Salzlösung in dem Behälter bei einem Druck p mit p < 1000 mbar absolut, insbesondere mit 900 mbar < p < 1000 mbar verdampft wird.

5. Verfahren nach Anspruch 3,
**dadurch gekennzeichnet,**
**dass** die Salzlösung bei der Temperatur T mit in etwa T 85° C < T, insbesondere in etwa 85° C < T < 120° C eingedampft wird.

6. Verfahren nach Anspruch 3.
**dadurch gekennzeichnet,**
**dass** die Salzlösung derart erwärmt wird, dass Natriumsulfat bereichsweise in γ-Na₂SO₄ umgewandelt wird, welches über β-Na₂SO₄ in monoklines α-Na₂SO₄ verwandelt und in rhombisches Na₂SO₄ übergeht.

7. Verfahren nach Anspruch 1,
**dadurch gekennzeichnet,**
**dass** die Erwärmung einer borathaltigen Lösung mit Mikrowellen einer Frequenz von in etwa 2450 MHz bei einer Leistung von 2 bis 20 kW eines die Mikrowellen erzeugenden Generators erfolgt.

8. Verfahren nach Anspruch 1,
**dadurch gekennzeichnet,**
**dass** die Erwärmung der Lösung mit Mikrowellen einer Frequenz von in etwa 915 MHz bei einer Leistung von 7 bis 75 kW eines die Mikrowellen erzeugenden Generators erfolgt.

9. Verfahren nach Anspruch 1,
**dadurch gekennzeichnet,**
**dass** der Salzlösung in einem Umfang Mikrowellenenergie zugeführt wird, dass sich bei in dem Behälter vorhandenem Druck von in etwa 900 bis 1000 mbar absolut Verdampfungsraten von 4 bis 25 l/h ergeben.

10. Verfahren nach Anspruch 1,
**dadurch gekennzeichnet,**
**dass** die einzudampfende Menge an Salzlösung batchweise dann dem Behälter zugeführt wird, wenn der Druck in dem Behälter in etwa dem eines mit dem Behälter verbundenen Kondensatorbehälters entspricht.

11. Verfahren nach Anspruch 1,
**dadurch gekennzeichnet,**
**dass** die einzudampfende Menge an Salzlösung batchweise dann dem Behälter zugeführt wird, wenn den Behälter verlassender Dampf (Brüden) eine konstante oder im Wesentlichen konstante Temperatur aufweist.

12. Verfahren nach Anspruch 1,
**dadurch gekennzeichnet,**
**dass** in dem Behälter eingedampfte Salzlösung vor Zuführung weiterer einzudampfender Menge an Salzlösung mit einer wasserunlöslichen Schicht abgedeckt wird.

13. Verfahren nach Anspruch 1,
**dadurch gekennzeichnet,**
**dass** die Salzlösung bei einer Temperatur T_{R} von etwa 20 °C oder bei einer Temperatur T_{R} von in etwa 30° C - 50° C dem Behälter zugeführt wird, wenn die Salzlösung einen hohen Salzgehalt aufweist.

14. Verfahren nach Anspruch 1, **gekennzeichnet durch** die Verfahrensschritte
- Einfüllen einer borathaltigen Lösung in einen Behälter,
- Aufbau eines Drucks in dem Behälter im Bereich zwischen 20 und 100 mbar unter Normaldruck,
- im Wesentlichen vollständiges Verdampfen von Wasser mittels Mikrowellen,
- zumindest teilweise Schmelzen auskristallisierten Salzes mittels Mikrowellen.

15. Verfahren nach Anspruch 1,
**dadurch gekennzeichnet,**
**dass** als Behälter ein 200 Liter Fass, insbesondere Rollreifenfass, und zur Erzeugung der Mikrowellen ein Magnetron mit einer Leistung von etwa 2 bis 20 kW, insbesondere zumindest 6kW, benutzt werden.

16. Verfahren nach Anspruch 1,
**dadurch gekennzeichnet,**
**dass** die Salzlösung derart erwärmt wird, dass deren den Behälter verlassender Dampf eine Temperatur von in etwa 70 - 130° C, insbesondere 80 - 120° C aufweist.

17. Verfahren nach Anspruch 1,
**dadurch gekennzeichnet,**
**dass** eine sulfathaltige Salzlösung derart in dem Behälter erwärmt wird, dass sich ein schichtweiser Aufbau von Thenardit, Glaubersalz und Wasser ergibt, wobei sukzessiv das Glaubersalz in Thenardit umgewandelt wird und dabei frei gewordenes Wasser verdampft wird.

18. Vorrichtung, insbesondere zur Durchführung eines Verfahrens zum Eindampfen und Verfestigen einer Salzlösung, insbesondere Natriumsulfat enthaltende Salzlösung oder borathaltiger Lösung, umfassend ein Magnetron zur Erzeugung von Mikrowellen, einen diesem nachgeschalteten Mikrowellenhohlleiter (28), einen über eine haubenartige Abdeckung (26) verschließbaren Behälter (12) mit zumindest einer Zuleitung für die zu verdampfende und zu verfestigende Salzlösung und eine Abführleitung, wobei der Mikrowellenhohlleiter im Bereich der Abdeckung (26) in ein Horn (29) übergeht oder ein solches aufweist, dessen Querschnitt und/oder Abstand zur Flüssigkeitsoberfläche der Lösung derart veränderbar ist, dass die Mikrowellen im wesentlichen ausschließlich unmittelbar auf die Salzlösung abstrahlbar sind.

19. Vorrichtung nach Anspruch 18,
**dadurch gekennzeichnet,**
**dass** der Behälter (12) durch einen vorzugsweise als Diffusor (27) ausgebildeten Deckel (26) gas- und mikrowellendicht verschließbar ist, wobei der Behälter zu dem Deckel bzw. Diffusor höhenverstellbar und/oder drehbar ausgebildet ist.

20. Vorrichtung nach Anspruch 18,
**dadurch gekennzeichnet,**
**dass** der Deckel (26) wie Diffusor (27) und der Behälter (12) randseitig über eine flüssigkeitsgefüllte Labyrinthdichtung gas- und mikrowellendicht verschlossen sind.

21. Vorrichtung nach Anspruch 18,
**dadurch gekennzeichnet,**
**dass** der Behälter (12) auf einer höhenverstellbaren Anordnung wie Hubtisch (37) drehbar angeordnet ist.

22. Vorrichtung nach Anspruch 18,
**dadurch gekennzeichnet,**
**dass** in dem zu dem Diffusor (27) führenden Hohlleiter (28) ein durch Luft- oder Inertgasspülung geschütztes Mikrowellenfenster (23) angeordnet ist.

23. Vorrichtung nach Anspruch 18,
**dadurch gekennzeichnet,**
**dass** in dem Hohlleiter (28) ein dem Mikrowellenfenster (23) nachgeordneter Plasmadetektor (25) angeordnet ist.

24. Vorrichtung nach Anspruch 18,
**dadurch gekennzeichnet,**
**dass** das vorzugsweise eine bauliche Einheit mit dem Deckel (26) bildende Horn H (29) einen rechteckförmigen Querschnitt aufweist.

25. Vorrichtung nach Anspruch 18,
**dadurch gekennzeichnet,**
**dass** von dem dem Behälter (12) nachgeschalteten Kondensatorbehälter (16) eine Leitung (34) ausgeht, in der ein Unterdruck sowohl in dem Kondensatorbehälter als auch in dem die zu verdampfende und zu verfestigende Lösung aufnehmenden Behälter (12) erzeugende Pumpe (32) angeordnet ist.

## Claims

1. A method for concentrating and solidifying salt-containing solutions, in particular borate- or sulfate-containing solutions, in a sealed vessel under the action of heat by means of microwaves, with the salt solution to be concentrated being fed into the vessel continuously or in batches, and liquid being evaporated and then preferably fed into a condensate vessel,
wherein
the salt-containing solution is heated in the vessel with a cover into which opens a microwave waveguide which leads into a horn or comprises the like, the cross section of the horn and/or its spacing to the liquid surface of the solution can be modified such that the microwaves are radiated substantially directly onto the salt-containing solution.

2. The method according to Claim 1 for concentrating and solidifying borate-containing solutions, in particular a borate-containing solution with a pH value > 5, preferably a pH value ≥7,
wherein
in order to increase microwave energy absorption, divalent and/ or trivalent iron compounds are added to the borate-containing solution.

3. The method according to Claim 1 for concentrating and solidifying a solution containing sodium sulfate, in particular a highly concentrated sulfate-containing solution, in a sealed vessel with the following process steps:
- feeding of the salt solution into the vessel, continuously or in batches; and
- heating of the salt solution by means of microwaves, such that present sodium sulfate converts into thenardite and segregates as bottom deposit from particular quantity of salt solution being fed in.

4. The method according to Claim 1,
wherein
the salt solution is concentrated in the vessel at a pressure p with p < 1000 mbar absolute, in particular with 900 mbar < p < 1000 mbar.

5. The method according to Claim 3,
wherein
the salt solution is concentrated at a temperature T with approximately T 85 °C < T, in particular approximately 85 °C < T < 120 °C.

6. The method according to Claim 3,
wherein
the salt solution is heated such that sodium sulfate is converted locally into γ-Na₂SO₄, which converts via β-Na₂SO₄ into monoclinic α-Na₂SO₄ and leads into rhombic Na₂SO₄.

7. The method according to Claim 1,
wherein
the heating of a borate-containing solution is accomplished with microwaves of a frequency of approximately 2450 MHz, at an output of 2 to 20 kW from a generator producing the microwaves.

8. The method according to Claim 1,
wherein
the heating of the solution is accomplished with microwaves of a frequency of approximately 915 MHz, at an output of 7 to 75 kW from a generator producing the microwaves.

9. The method according to Claim 1,
wherein
microwave energy is fed to the salt solution in a quantity such that with a pressure in the vessel of approximately 900 to 1000 mbar absolute, evaporation rates of 4 to 25 l/h result.

10. The method according to Claim 1,
wherein
the quantity of salt solution to be concentrated is fed in batches into the vessel when the pressure in the vessel corresponds approximately to that in a condensate vessel connected to the vessel.

11. The method according to Claim 1,
wherein
the quantity of salt solution to be concentrated is then fed in batches into the vessel when vapor (exhaust vapors) leaving the vessel shows a constant or substantially constant temperature.

12. The method according to Claim 1,
wherein
salt solution concentrated in the vessel is to be covered with a water-insoluble layer before feeding of additional quantity of salt solution to be concentrated.

13. The method according to Claim 1,
wherein
the salt solution is fed into the vessel at a temperature T_{R} of approximately 20 °C, or at a temperature T_{R} of approximately 30 °C - 50 °C, if the salt solution has a high salt content.

14. The method according to Claim 1, **characterized by** the following process steps:
- filling of a borate-containing solution into a vessel;
- building up of a pressure in the vessel in the range between 20 and 100 mbar below standard pressure;
- substantially complete evaporating of water by means of microwaves;
- at least partly melting by means of microwaves of the salt being crystallized out.

15. The method according to Claim 1,
wherein
a 200-liter drum, in particular roller hoop drum, is used as a vessel, and a magnetron having an output of approximately 2 to 20 kW, in particular at least 6 kW, is used to generate the microwaves.

16. The method according to Claim 1,
wherein
the salt solution is heated such that the vapor leaving the vessel has a temperature of approximately 70 - 130 °C, in particular 80 - 120 °C.

17. The method according to Claim 1,
wherein
a sulfate-containing salt solution is heated in the vessel in such a way that a layered structure of thenardite, Glauber salt, and water results, the Glauber salt successively being converted into thenardite and water released thereby being evaporated.

18. An apparatus, in particular for carrying out a method for concentrating and solidifying a salt solution, in particular a salt solution containing sodium sulfate or borate-containing solution, comprising a magnetron for generating microwaves; a microwave waveguide (28) being downstreamed thereto; a vessel (12), sealable by means of a hood-shaped cover (26), having at least one feeder for the salt solution to be concentrated and solidified as well as an outlet, with the microwave waveguide leading in the region of the cover (26) into a horn (29), or comprises the like, the cross section of the horn and/or its spacing to the liquid surface of the solution can be modified in such a way that the microwaves can be radiated substantially solely directly onto the salt solution.

19. The apparatus according to Claim 18,
wherein
the vessel (12) can be sealed gas- and microwave-tight by means of a cover (26) preferably configured as a diffuser (27), with the vessel being configured height-adjustable, and/or rotatable in relation to the cover and diffuser, respectively.

20. The apparatus according to Claim 18,
wherein
the cover (26), for example diffuser (27), and the vessel (12) are sealed at the edges gas- and microwave-tight by means of a liquid-filled labyrinth seal.

21. The apparatus according to Claim 18,
wherein
the vessel (12) is arranged rotatably on a height-adjustable arrangement, for example a lifting platform (37).

22. The apparatus according to Claim 18,
wherein
a microwave window (23), protected by air rinsing or inert-gas rinsing, is arranged in the waveguide (28) leading to the diffuser (27).

23. The apparatus according to Claim 18,
wherein
a plasma detector (25) is arranged in the waveguide (28) being downstreamed to the microwave window (23).

24. The apparatus according to Claim 18,
wherein
the horn (29), preferably forming a constructive unit with the cover (26), comprises a rectangular-shaped cross section.

25. The apparatus according to Claim 18,
wherein
a pipe (34) arising from the condensate vessel (16) being downstreamed to the vessel (12), in said pipe a pump (32) is arranged, generating a negative pressure both in the condensate vessel and in the vessel (12) receiving the solution to be evaporated and solidified.

## Revendications

1. Procédé de vaporisation et de solidification de solutions salées, en particulier de solutions contenant un borate ou un sulfate, dans un récipient fermé, sous l'action de la chaleur au moyen de micro-ondes, selon lequel on introduit la solution salée à vaporiser de façon continue ou discontinue dans le récipient, on fait évaporer le liquide puis on l'introduit de préférence dans un récipient de condensation,
**caractérisé en ce qu'**
on chauffe la solution salée dans le récipient avec un couvercle dans lequel débouche une canalisation creuse à micro-ondes, qui aboutit dans une corne ou présente un dispositif de ce genre, dont la section et/ou l'intervalle par rapport à la surface liquide de la solution peut être modifié(e) de manière que les micro-ondes irradient essentiellement immédiatement la solution salée.

2. Procédé selon la revendication 1 de vaporisation et de la solidification de solutions contenant du borate, en particulier d'une solution contenant du borate ayant un pH >5, de préférence un pH ≥7,
**caractérisé en ce que**
pour accroître l'absorption de l'énergie de micro-onde de la solution contenant du borate on ajoute des composés de fer bi- et/ou trivalents.

3. Procédé selon la revendication 1 de vaporisation et de solidification d'une solution contenant du sulfate de sodium, en particulier d'une solution hautement concentrée en sulfates, dans un récipient fermé comprenant les étapes opératoires suivantes :
- addition continue ou discontinue de la solution salée dans le récipient et
- chauffage de la solution salée au moyen de micro-ondes de manière que le sulfate de sodium présent se transforme en thénardite et se sépare sous forme de précipité de la masse de solution salée introduite à chaque fois.

4. Procédé selon la revendication 1,
**caractérisé en ce qu'**
on fait évaporer la solution salée dans le récipient à une pression p, où p<1000 mbar absolus, en particulier 900 mbar < p < 1000 mbar.

5. Procédé selon la revendication 3,
**caractérisé en ce qu'**
on fait évaporer la solution salée à une température T>85°C, en particulier 85°C < T < 120°C.

6. Procédé selon la revendication 3,
**caractérisé en ce qu'**
on chauffe la solution salée de manière que le sulfate de sodium soit transformé par intervalles en γ-Na₂SO₄, lequel se transforme par l'intermédiaire de β-Na₂SO₄ en α-Na₂SO₄ monocline et aboutit à un Na₂SO₄ rhombique.

7. Procédé selon la revendication 1,
**caractérisé en ce qu'**
on procède au chauffage d'une solution contenant du borate avec des micro-ondes d'une fréquence d'environ 2450 MHz à une puissance de 2 à 20 kW d'un générateur produisant les micro-ondes.

8. Procédé selon la revendication 1,
**caractérisé en ce qu'**
on procède au chauffage de la solution avec des micro-ondes d'une fréquence d'environ 915 MHz à une puissance de 5 à 75 kW d'un générateur produisant les micro-ondes.

9. Procédé selon la revendication 1,
**caractérisé en ce qu'**
on introduit la solution salée dans un environnement d'énergie de micro-ondes qui sont produites à la pression régnant dans le récipient, d'environ 900 à 1000 mbar absolus, donnant des vitesses de vaporisation de 4 à 25 litres/heure.

10. Procédé selon la revendication 1,
**caractérisé en ce qu'**
on introduit la quantité de solution salée à vaporiser de façon discontinue dans le récipient lorsque la pression dans ce récipient correspond approximativement à celle d'un récipient de condensation relié au récipient.

11. Procédé selon la revendication 1,
**caractérisé en ce qu'**
on introduit la quantité de solution salée à vaporiser dans le récipient lorsque la vapeur quittant le récipient (vapeur chaude) présente une température constante ou sensiblement constante.

12. Procédé selon la revendication 1,
**caractérisé en ce qu'**
on recouvre la solution salée vaporisée dans le récipient, avant d'introduire une quantité supplémentaire de solution salée à vaporiser, avec une couche insoluble dans l'eau.

13. Procédé selon la revendication 1,
**caractérisé en ce qu'**
on introduit dans le récipient la solution salée à une température TR d'environ 20°C ou à une température T_{R} d'environ 30°C à 50°C lorsque la solution salée présente une teneur en sel élevée.

14. Procédé selon la revendication 1,
**caractérisé par** les étapes opératoires suivantes :
- introduction d'une solution contenant du borate dans un récipient,
- accumulation dans le récipient d'une pression située dans l'intervalle compris entre 20 et 100 mbar à pression normale,
- vaporisation sensiblement complète de l'eau au moyen de micro-ondes,
- fusion au moins partielle du sel séparé par cristallisation au moyen de micro-ondes.

15. Procédé selon la revendication 1,
**caractérisé en ce qu'**
on utilise comme récipient une cuve de 200 l, en particulier une cuve sur pneu roulante, et pour produire les micro-ondes, un Magnétron d'une puissance de 2 à 20 kW, en particulier d'au moins 6 kW.

16. Procédé selon la revendication 1,
**caractérisé en ce qu'**
on chauffe la solution salée de manière que la vapeur quittant le récipient présente une température d'environ 70 à 130°C, en particulier de 80 à 120°C.

17. Procédé selon la revendication 1,
**caractérisé en ce qu'**
on chauffe une solution salée contenant un sulfate dans le récipient de manière qu'il y ait constitution par étales de thénardite, de sel de Glauber et d'eau, le sel de Glauber étant successivement transformé en thénardite et l'eau ainsi libérée étant vaporisée.

18. Dispositif, en particulier pour la réalisation d'un procédé de vaporisation et de solidification d'une solution salée, en particulier d'une solution contenant du sulfate de sodium ou d'une solution contenant un borate, comprenant un magnétron pour la production de micro-ondes, un conducteur creux de micro-ondes disposé à la suite (28), un récipient (12) pouvant être fermé par un couvercle (26) en forme de dôme, avec au moins une canalisation d'arrivée pour la solution salée à vaporiser et à solidifier et une canalisation d'évacuation, le conducteur creux à micro-ondes aboutissant dans la zone du couvercle (26) à une cornue (29) ou un dispositif de ce genre, dont la section et/ou l'intervalle par rapport à la surface liquide de la solution peut être modifié de manière que les micro-ondes puissent irradier de façon essentiellement exclusive immédiatement sur la solution salée.

19. Dispositif selon la revendication 18,
**caractérisé en ce qu'**
on peut fermer le récipient (12), par un couvercle (26) formé de préférence en diffuseur (27) de manière à le rendre étanche aux gaz et aux micro-ondes, le récipient étant formé de manière à être réglable en hauteur et/ou à pouvoir tourner par rapport au couvercle ou selon les cas au diffuseur.

20. Dispositif selon la revendication 18,
**caractérisé en ce que**
le couvercle (26) comme le diffuseur (27) et le récipient (12) sont fermés sur leur bord de manière à les rendre étanches aux gaz et aux micro-ondes par un joint à labyrinthe rempli de liquide.

21. Dispositif selon la revendication 18,
**caractérisé en ce que**
le récipient (12) est disposé de manière à pouvoir tourner sur un dispositif réglable en hauteur comme une plate-forme mobile (37).

22. Dispositif selon la revendication 18,
**caractérisé en ce que**
dans le conducteur creux (28) conduisant au diffuseur (27) est disposée une fenêtre à micro-ondes (23) protégée par balayage d'air ou de gaz inerte.

23. Dispositif selon la revendication 18,
**caractérisé en ce qu'**
est disposé dans le conducteur creux (28) un détecteur à plasma (25) disposé à la suite de la fenêtre à micro-ondes (23).

24. Dispositif selon la revendication 18,
**caractérisé en ce que**
de préférence une cornue (29) formant une unité de construction (26) présente une section rectangulaire.

25. Dispositif selon la revendication 18,
**caractérisé en ce que**
du récipient de condensation (16) disposé à la suite du récipient (12) sort une canalisation (34) dans laquelle règne une dépression, aussi bien dans le récipient de condensation que dans le récipient (12) de prélèvement de la solution à vaporiser et à solidifier, produite par une pompe (32).
